# EUROPEAN PATENT SPECIFICATION

(11) **EP 2 810 856 B1**
(45) Date of publication and mention of the grant of the patent: **01.01.2020**
(21) Application number: 14170837.0
(22) Date of filing: 02.06.2014
(51) Int. Cl.: B62D 59/04

(54) **Drive unit for a trailer and method of installation**
Antriebseinheit für einen Anhänger und Einbauverfahren dafür
Unité d'entraînement pour une remorque et procédé d'installation

(30) Priority: 03.06.2013 GB 201309884; 20.12.2013 GB 201322680
(43) Date of publication of application: 10.12.2014
(73) Proprietor: Purple Line Limited, Ipswich, Suffolk IP9 2BB (GB)
(72) Inventor: Barrow, Stuart, IPSWICH, Suffolk IP9 2BB (GB); Schofield, Jonathan, IPSWICH, Suffolk IP9 2BB (GB)
(74) Representative: Dummett Copp LLP

(56) References cited:
- EP-A1- 2 409 903
- DE-U1-202009 005 185
- DE-U1-202010 008 600

## Description

### FIELD OF THE INVENTION

The present invention relates to a drive unit for a trailer, an assembly comprising a trailer and a drive unit and a method of installing a drive system to a trailer. In particular, the present invention relates to a drive unit for a caravan, a caravan comprising a drive unit and a method of installing a drive system to a caravan.

### BACKGROUND OF THE INVENTION

Trailers are unpowered vehicles which are designed to be coupled to and then moved by a powered vehicle, for example a car, van etc. Such trailers include caravans. Generally, caravans are towed to a suitable site by a car. Once at a site, the caravan is unhitched from the car and the caravan is moved onto a pitch. The driver can try to manoeuvre the caravan directly on to the pitch but this is frequently not possible due to the confined spaces etc. Caravans are unpowered but a person or group of people can manually push and/or pull the caravan to the pitch. Alternatively, a drive system such as a caravan mover can be used to move the caravan on to the pitch.

A caravan mover generally comprises a motor which is controlled by a user. The caravan mover includes engagement means whereby a roller is selectively pressed against or removed from the outer tread of a wheel of the caravan. Typically, a caravan mover includes a drive roller which is urged into contact with the outer tread of a wheel of the caravan. A motor is arranged to rotate the drive roller which, through contact with the outer tread of the wheel, thereby rotates the wheel of the caravan. The caravan generally includes a caravan mover on one or two opposed wheels on an axle. Accordingly, through the selective movement of each caravan mover and the respective caravan wheels, the caravan can be arranged to independently move forwards or backwards and can be turned in either direction.

The motor of a caravan mover requires an electrical power supply. This power source is generally provided by a leisure battery provided inside the caravan. Alternatively, if the caravan does not have a leisure battery, then a battery and charger may be specifically fitted inside the caravan. The installation of such a specific power system takes a significant amount of time and this, therefore, significantly increases the cost of having a caravan mover. The dedicated power source may be fitted and located underneath a bed or a seating area but this still takes up valuable space inside the caravan. Furthermore, the power supply system must penetrate through the caravan from the outside, where the caravan mover is located, to the inside, where the battery is located. This penetration inevitably creates potential problems and areas of weakness which could cause the integrity of the caravan to deteriorate over time.

Each retrospectively fitted caravan mover must be individually created and installed since the cables must be optimally routed and the lengths of the cables must be cut to the correct lengths. The cables need individual guides which are generally secured into the underside of the caravan.

The electric control system for the caravan mover is generally fitted inside the caravan next to the battery. Again, this requires cables to be individually secured and routed through the caravan to the external caravan mover.

DE 20 2009 005 185 discloses an auxiliary drive system for a caravan including a control unit, a battery and drive units to rotate the wheel in order to move the caravan without a towing vehicle. The battery is located within a storage control unit is whilst the control unit is mounted on a side part of the caravan.

DE 20 2010 008 600 discloses an auxiliary drive unit for a caravan whch enables the drive rollers to be powered by mains voltage from a static external power supply unit.

EP 2 409 903 provides an auxiliary drive unit for a caravan in which drive rollers are powered by a battery located underneath the chassis of the caravan and the controller is similarly provided mounted on the chassis.

Overall, the retrospective fitting of a caravan mover requires a bespoke system which is individually created and fitted to the caravan and thereby such caravan movers can be relatively expensive.

It is an aim of the present invention to overcome at least one problem associated with the prior art and they are referred to herein or otherwise.

### SUMMARY OF THE INVENTION

According to a first aspect of the present invention there is a drive unit for a trailer comprising drive means, power means and mounting means, the mounting means being arranged , in use, to be secured to the trailer, the drive means being arranged to rotate a wheel of a trailer around an axle of the trailer, the drive means comprising actuating means to actuate engagement means between a disengaged configuration and an engaged configuration in which the engagement means transmits movement of the drive means to a wheel of the trailer, characterised in that:
the power means is detachably connected to the drive means by power leads said detachable connection comprising connector plugs and wherein the power means is provided in a portable case and the drive unit further comprises control means to control the movement of the trailer by the drive unit and wherein the control means comprises a control unit located in the portable case and an operating device which comprises a remote control unit.

Preferably the drive means is detachably mounted to the mounting means.

Preferably the power means is arranged, in use, to be supported spaced from the mounting means.

Preferably, the mounting means is arranged to be secured to the trailer and then for the drive means to be subsequently mounted to the mounting means. The power means may then be connected to the drive means.

Preferably the drive means comprise power receiving leads which are arranged to receive the power from the power means. The power receiving leads may terminate at a power receiving connector which may comprise a two pole connector. The power receiving connector may comprise a weatherproof connector

Preferably power means comprise power supply leads which are arranged to supply power to the drive means. The power supply leads may terminate at a power supply connector which may comprise a two pole connector. The power supply connector may comprise a weatherproof connector.

Preferably the power receiving connector and the power supply connector are arranged to be plugged together. Preferably the power receiving connector and the power supply connector form a plug and socket arrangement. The plug and socket arrangement may comprise a push fit arrangement and the connection may be maintained by a clip arrangement.

Preferably the power receiving connector and the power supply connector form a weatherproof connection.

Preferably the trailer comprises a body shell defining an internal space.

Preferably the power receiving leads are arranged to be mounted externally of the body shell of the trailer. Preferably an entire (or complete/full) length of the power receiving leads are arranged to be mounted or located externally of the body shell of the trailer. The entire (or complete/full) length of the power receiving leads may comprise the length of the power receiving leads which extends between the drive means and the power receiving connector.

Preferably the power supply leads are arranged to be mounted externally of the body shell of the trailer. Preferably an entire (or complete/full) length of the power supply leads are arranged to be mounted or located externally of the body shell of the trailer. The entire (or complete/full) length of the power supply leads may comprise the length of the power supply leads which extends between the power means (and/or the portable case) and the power supply connector.

Preferably the power leads are arranged to be mounted externally of the body shell of the trailer. Preferably an entire (or complete/full) length of the power leads are arranged to be mounted or located externally of the body shell of the trailer. The entire (or complete/full) length of the power leads may comprise the length of the power leads which extends between the power means (and/or the portable case) and the drive means.

Preferably a route for the entire (or complete/full) length of the power leads is arranged to exclude the requirement for a dedicated passageway through the body shell of the trailer.

Preferably a route for the entire (or complete/full) length of the power leads may utilise a doorway/opening provided by the body shell of the trailer and wherein the doorway/opening is provided for a different purpose/function. The doorway may comprise a doorway to a caravan or may comprise a charging groove of a caravan/folding camper.

The portable case may comprise lead retaining means to retain and store the power supply leads when not in use. The lead retaining means may comprise spooling means such that the power supply means can be spooled when not in use.

The remote control unit may enable a user to move the trailer by wireless signals (e.g. infra red).

The control means may be incorporated within the power means. The power means may comprise a power source and control means. The power source may comprise a battery and preferably comprises a rechargeable battery.

The power source may be connected to the control unit by power cables and power supply leads may be arranged to extend from the control unit and these power supply leads may be arranged to be detachably connected to the power receiving leads of the drive means.

The drive unit may comprise two pairs of power supply leads and wherein the first pair of power supply leads are arranged to be detachably connected to power receiving leads of a first driven roller (for driving a first wheel of the trailer) and the second pair of power supply leads are arranged to be detachably connected to the power receiving leads of a second driven roller (for driving a second wheel of the trailer).

The drive unit may comprise four pairs of power supply leads and wherein each pair of power supply leads are arranged to be detachably connected to power receiving leads of a respective driven roller (for driving a respective wheel of the trailer).

The portable case may be arranged, in use, to be supported to the trailer. The portable case may be supported in a doorway of the trailer to prevent penetration of the body shell of the trailer (by a route for the power leads between the power means and the drive means) to provide a route for the power leads connecting the power means to the drive means.

The portable case may be arranged, in use, to be supported to the trailer by case support means. The case support means may comprise a part of an A frame of the trailer.

Preferably the drive unit comprises a self contained drive unit for the independent movement of a trailer.

The drive unit may comprise an auxiliary drive for an unpowered trailer.

The drive unit may comprise control means to control the movement of the trailer by the drive unit. The control means may comprise a control unit mounted to the trailer with the mounting means and an operating device which may comprise a remote control unit. The remote control unit may enable a user to move the trailer by wireless signals (e.g. infra red).

The drive unit may comprise a support member which may comprise a longitudinal frame member. The length of support member or longitudinal frame member may be extendable. The support member or longitudinal frame member may be telescopic.

The support member or longitudinal frame member may comprise a central section and two lateral sleeve sections. Preferably the central section slidably extends between the two lateral sections. The mounting means may be provided on the two lateral sections.

The support member may comprise a rigid member.

The support member may comprise a linear member.

The support member may comprise a rigid fixing for the drive means and for the power source such that a separation distance between the power source and the drive means can be fixed prior to mounting the integrated drive to a trailer.

The drive unit may comprise a support member on which the drive means, power source and mounting means are provided. Preferably the support member forms a self supporting structure on which the drive means, power source and mounting means are all provided. Preferably the securement of the support member to a trailer thereby simultaneously secures the drive means and the power source to an external part of the trailer.

The support member may be adjustable in length. The support member may be telescopic.

Preferably the mounting means is arranged to mount the drive unit to a chassis of the trailer. Preferably the mounting means is arranged to solely mount the drive unit to a chassis of the trailer.

Preferably the mounting means is arranged to mount the drive unit on an external part of a trailer and preferably to the underside of a trailer.

The mounting means may comprise a series of mounting elements. The or each mounting element may comprise a bolt which is arranged to secure the drive unit to a chassis of the vehicle.

The mounting element may be located spaced apart of the support member. The mounting means may comprise four mounting elements.

Preferably the drive means comprises a driven roller. The drive means may comprise a first driven roller for rotating a first wheel of the trailer and a second driven roller for rotating a second wheel of the trailer.

The drive system may be arranged to rotate a wheel (or two wheels) of a trailer around an axle of the trailer. The trailer may have a single axle or may have two axles. Each axle may have a wheel located at each longitudinal end.

The actuation means may comprise movement means (drive engagement means). Preferably the movement means is arranged to move the driven roller between an engaged position in which the driven roller is urged against an outer circumferential surface of a wheel of the trailer and a disengaged position in which the driven roller is disengaged with the outer circumferential surface of the wheel of the trailer.

The movement means may comprise an actuator and preferably comprises an electro-mechanical actuator.

The movement means may comprise a solenoid.

The movement means may comprise bias means or urging means to urge the driven roller towards an engaged position.

The movement means may extend or retract the driven roller from being urged against the outer circumferential surface of the wheel of the trailer.

The driven roller may comprise an elongate cylindrical roller with a contoured contact surface. The contact surface may comprise a plurality of longitudinal ridges. The longitudinal ridges may have a substantially sinusoidal profile. Preferably the contact surface is arranged, in the engaged configuration, to be urged against a tread of the wheel of the trailer. Preferably the contoured contact surface provides a frictional grip with the tread of the wheel of the trailer.

Preferably the drive means comprises a motor and preferably comprises an electrically powered motor.

The drive unit may comprise a first wheel driving device. The drive unit may comprise a second wheel driving device. Each wheel driving device may comprise a driven roller, a motor and drive engagement means.

Each wheel driving device may be detachable form the support member. Preferably each wheel driving device is arranged, in use, to be mounted on a driving device mounting bracket. The drive unit may comprise a first driving device mounting bracket located at or towards a first end of the support member and a second driving device mounting bracket located at or towards a second end of the support member.

Preferably the mounting of the support member to the trailer secures the driving device mounting brackets to be (rigidly) secured to the trailer.

Preferably the drive unit is arranged to be suspended from the underside of a caravan. Preferably the drive unit and all of the components are solely suspended by the mounting means.

The first wheel driving device and the second wheel driving device may be powered by a single (shared) battery and are preferably controlled by a single (shared) control unit.

The support member may provide a passageway between the power source and the drive means. Preferably the support member provides a passageway between the power source and the first wheel driving device. Preferably the support member provides a passageway between the power source and the second wheel driving device. Preferably the or each passageway contains power cables extending between the power source and the first wheel driving device and/or the second wheel driving device.

The support member may provide a passageway between a control unit and the power source and/or the drive means. Preferably the support member provides a passageway between the control unit and the first wheel driving device. Preferably the support member provides a passageway between the control unit and the second wheel driving device. Preferably the or each passageway contains control cables extending between the control unit and the first wheel driving device and/or the second wheel driving device.

The control unit may be contained within a control unit enclosure. The control unit enclosure may be waterproof and/or shock proof.

The control unit may be connectable within the drive unit by connectors.

The power source may comprise a battery which may be contained in a battery enclosure. The battery enclosure may be water proof and/or shock proof.

The battery may be connectable within the drive unit by connectors.

The drive unit may provide a terminal into which the first wheel driving device and or the second wheel driving device can be connected such that the first wheel driving device and/or the second wheel driving device may be detachable from the support member.

Preferably the present invention comprises a powered drive unit for a trailer.

Preferably the present invention comprises an drive unit for a trailer with an integral power supply.

Preferably the drive means comprises an auxiliary drive.

Preferably the trailer comprises a caravan.

According to a second aspect of the present invention there is provided a trailer including a drive unit, the drive unit being in accordance with the first aspect of the present invention.

According to a third aspect of the present invention there is a method of installing an drive unit to a trailer wherein the drive unit comprises:
drive means, power means and mounting means, the drive means being arranged to rotate a wheel of a trailer around an axle of the trailer, the drive means comprising actuating means to actuate engagement means between a disengaged configuration and an engaged configuration in which the engagement means transmits movement of the drive means to a wheel of the trailer; characterised by
the method comprises detachably connecting the power means to the drive means by power leads using a detachable connection comprising connector plugs and wherein the power means is provided in a portable case; and
providing control means to control the movement of the trailer by the drive unit and wherein the control means comprises a control unit located in the portable case and an operating device which comprises a remote control unit.

### BRIEF DESCRIPTION OF THE DRAWINGS

The preferred embodiments of the present invention will now be described, by way of example only, with reference to the figures that follow, in which:
Figure 1 is a perspective view of an integrated drive unit located adjacent to the two wheels of a trailer.
Figure 2 is a perspective view from behind of an integrated drive unit.
Figure 3 is a perspective view from in front of an integrated drive unit.
Figure 4 is a plan view of an integrated drive unit.
Figure 5 is a front view of an integrated drive unit.
Figure 6 is a side view of an integrated drive unit.
Figure 7 is behind of an integrated drive unit.
Figure 8 is a side view of an integrated drive unit with the driven roller disengaged from the wheel of the trailer.
Figure 9 is a side view of an integrated drive unit with the driven roller engaged with the wheel of a trailer.
Figure 10 is a side view of an integrated drive unit with the drive means detached from the drive unit.
Figure 11 is a perspective view of a part of an integrated drive unit and the wheels of a trailer with the drive driven rollers detached from the integrated drive unit and a spacer located during the installation process.
Figure 12 is a side view of an integrated drive unit with the driven rollers detached showing the waterproof battery monitor.
Figure 13 is a side view of an integrated drive unit with the driven rollers detached showing the control unit indicators.
Figure 14 is an exploded view of a preferred embodiment of a drive unit for a trailer.
Figure 15 is a schematic view of a preferred embodiment of a drive unit for a trailer.
Figure 16 is an exploded view of a preferred embodiment of a drive unit for a trailer.
Figure 17 is a plan view of a preferred embodiment of a portable case.
Figure 18 is a perspective view of an integrated drive unit with the drive means detached from the drive unit and including a mounting adaptor.
Figure 19 is a perspective view of an integrated drive unit with the drive means detached from the drive unit.

### DESCRIPTION OF THE PREFERRED EMBODIMENTS

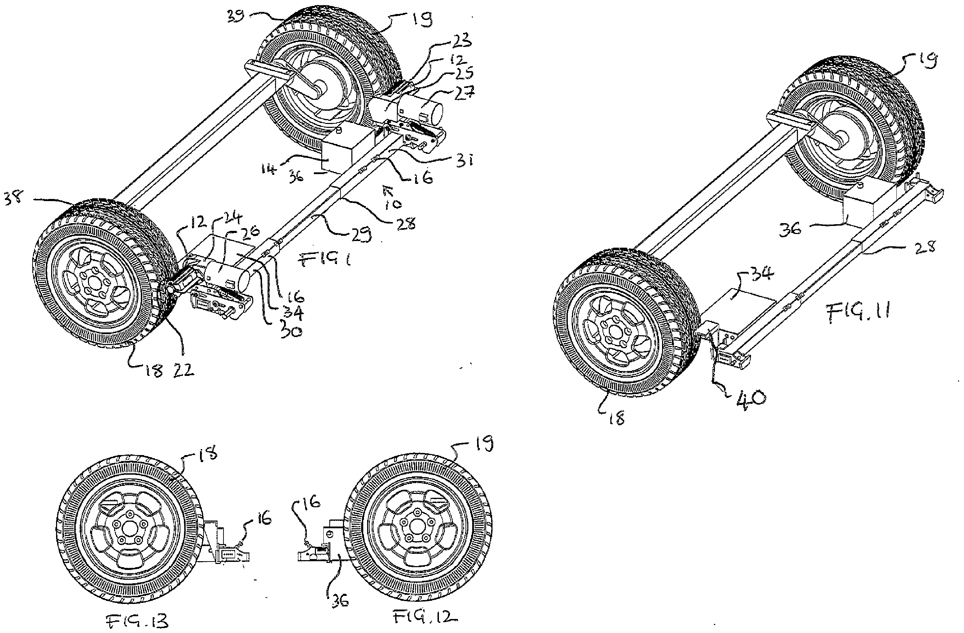

As shown in Figure 1, an integrated drive unit 10 comprises drive means 12 which may comprise an electronic control unit (ECU), a power source 14 and mounting means 16 such that the integrated drive unit 10 can be quickly and simply retrospectively installed to a trailer and, in particular to a caravan. One aim is to provide a self contained and self supporting drive unit 10 with all the components contained in a single unit. The integrated drive unit 10 can then be simply and easily retrospectively installed on a caravan without the need to penetrate through the caravan in order to connect driven rollers to an internal power supply.

The drive means 12 or ECU comprises a first driven roller 22 located at or towards a first end of a support member 28 and the drive means 12 also comprises a second driven roller 23 located at or towards a second end of the support member 28. The first driven roller 22 is arranged, in use to drive a first wheel 18 of a caravan and the second driven roller 23 is arranged, in use, to drive a second wheel 19 of a caravan. In use, a single wheel 18, 19 of the caravan can be rotated or both wheels 18, 19 can be simultaneously rotated in order to move the caravan in a linear path or in a curved path.

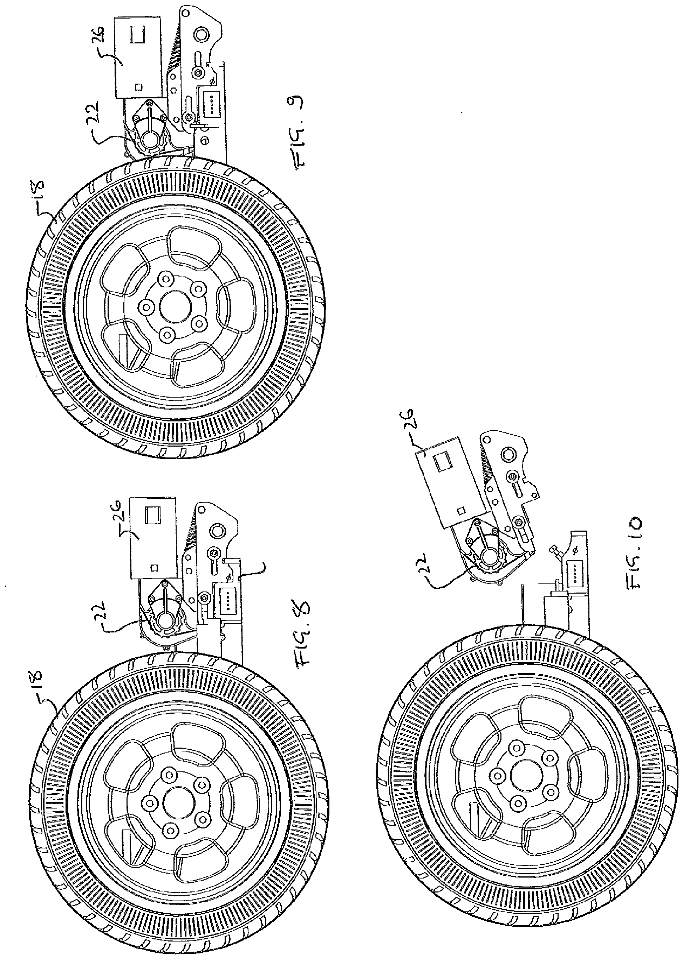

Each driven roller 22, 23 is actuated between an engaged position (as shown in Figure 9) and a disengaged position (as shown in Figure 8) by actuation means comprising drive engagement means 26, 27. The drive engagement means 26, 27 is arranged to move the respective driven roller 22, 23 towards or away from the outer circumferential surface 38, 39 of the wheel 18, 19 (e.g. the tread of the tyre). In the engaged position, the outer peripheral surface of the driven roller 22, 23 is in contact with the tread 38, 39 of the wheel 18, 19. Furthermore, the driven roller 22, 23 is urged against the surface 38, 39 of the wheel 18, 19 in order for a rotational movement of the driven roller 22, 23 to be transmitted to the wheel 18, 19. Accordingly, in this engaged position, the driven roller 22, 23 can be rotated in order to rotate the wheel 18, 19 of the caravan.

The drive engagement means may comprise a piston, an electro-mechanical actuator or other suitable mechanism to provide this movement and, in particular, provides a linear movement between the disengaged potion and the engaged position. In the disengaged position, the outer contact surface (engagement means) of the driven roller 22, 23 is spaced from the tread 38, 39 of the associated tyre such that no rotational movement is transmitted.

The driven roller 22, 23 comprises a cylindrical roller. The outer surface of the cylindrical roller comprises a contoured surface in order to provide an improved frictional grip between the driven roller 22, 23 and the tread of the tyre.

The drive engagement means 26, 27 are controlled by the control means 34 though the ECU provided by the drive unit 10. The control unit 34 is connected to the drive engagement means 26, 27 by wiring and/or cabling which are all contained within the integrated drive unit 10. Accordingly, these wires and/or cables do not need to be cut to size during the installation process since they are already preinstalled. In addition, the integrated drive unit 10 contains these cables and/or wires such that they are protected and shielded. The support member 28 effectively provides a section of trunking for these cables and/or wires.

Each driven roller 22, 23 also includes a respective drive motor 24, 25 comprising a gear box. The drive motor 24, 25 including the respective gearbox is located adjacent to the driven roller 22, 23 and comprises an electric motor which produces the rotational drive for the driven roller 22, 23.

The integrated drive unit provide a first wheel driving device and a second wheel driving device. Each wheel driving device comprises a driven roller, a motor and a drive engagement means. Each wheel driving device is detachable, as shown in Figure 10. This detachment may help in the installation process and in the use of a spacer or spacer component 40 (as shown in Figure 11) to correctly position the driven rollers. The wheel driving devices are mounted and detached from mounting brackets provided at the ends of the support member 28.

The motors 24, 25 are controlled by the control means 34 provided by the drive unit 10. The control unit 34 is connected to the motor 24, 25 by wiring and/or cabling which are all contained within the integrated drive unit 10. Accordingly, these wires and/or cables do not need to be cut to size during the installation process since they are already preinstalled. In addition, the integrated drive unit 10 provides respective passageways which contain these cables and/or wires such that they are protected and shielded. The support member 28 effectively provides a section of trunking for these cables and/or wires.

The integrated drive unit 10 comprises a single support member 28 which extends from the first driven roller 22 located adjacent to the first caravan wheel 18 to the second drive roller 23 located adjacent to the second caravan wheel 19.

The support member 28 comprises mounting means in order to mount the integrated drive unit 10 to the trailer. In particular, the mounting means 16 secures the drive rollers 22, 23 and power source 14 to an external part of the caravan such that the integrated drive unit 10 is installed as a single item or unit that prevents an installer from having to individually mount the components of a caravan mover.

In prior art systems, the installation of a caravan mover requires the individual mounting of the components. In addition, the interconnecting cables and wiring must all be cut to size and then individually routed and secured to the caravan. Furthermore, the battery is located internally such that holes must be cut through the caravan body/shell in order to route the power cables to the battery.

The mounting means 16 comprises a series or an array of individual mounting members spaced along the length of the support member 28. In particular, the mounting members comprise mounting bolts in order to mount the support member 28, and hence the integrated drive unit 10, to the underside of a caravan. Specifically, the mounting bolts secure the integrated drive unit 10 to the chassis of the caravan.

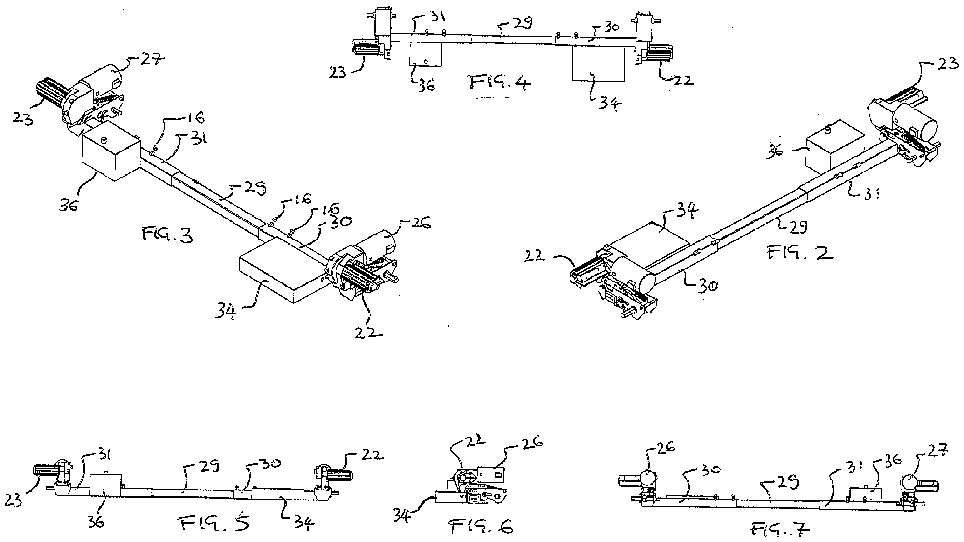

There are four mounting bolts spaced apart along the support member 28, as shown in Figure 2 to Figure 7. The support member 28 comprises an elongate member such that the integrated drive unit 10 can be easily installed on caravan on different widths. The support member provides a telescopic member with two lateral sleeve portions 30, 31 and a central section 29 which is partially contained within the two lateral sections. This arrangement also enables the integrated drive unit to be relatively compact for shipping, storage and packaging reasons.

The power source 14 comprises a battery which locates within a battery enclosure 36 supported on the support member 28. The battery enclosure 36 is waterproof and shock resistant. The battery enclosure 36 is also provided with air vents. The battery enclosure 36 is provided with an opening such that a user can inspect and replace the battery, if necessary. Furthermore, the integrated drive unit 10 provides a battery monitor with a visual display 37, as shown in Figure 12. This visual display is visible to a user and may indicate the battery charge level. The integrated drive unit 10 may also comprise a recharger unit for the battery.

The integrated drive unit 10 also comprises a control unit 34 comprising an ECU which locates within a control unit enclosure. Again, the enclosure is waterproof and shock resistant. As with available caravan movers, the control unit 34 processes the signals which are received from a remote control unit operated by the user. In particular, the user can select to move either wheel independently in a forward or reverse direction in order to manoeuvre the caravan. The control unit 34 includes control unit indicators 35, as shown in Figure 13. These indicators may indicate the operation of the integrated drive unit 10.

The wiring and cables for connecting the battery 14, driven rollers 22, 23 and the control unit 34 are all contained within the support member 28 or at least a shroud associated with the support member 28. In particular, the support member 28 effectively provides guide passageways which operate as trunking for the various cables and wires. This enables the drive unit 10 to be fully integrated such that the cables and wires do not have to be independently secured to the caravan or even through the caravan.

This example refers to the movement of a caravan although it should be appreciated that this could be used to move other unpowered trailers.

The drive system comprises a motor which is a standalone electric motor which is powered by a battery. The motor is connected to a control unit (not shown) which enables a user to control the motor. In particular, the control unit comprises a remote control unit which enables a user to power the motor in a forwards direction, a reverse direction or to switch the motor off.

Once the caravan has been manoeuvred into position, the drive system 10 can be switched off which moves and retracts the driven rollers 22, 23 away from the wheels 18, 19. Accordingly, the driven rollers 22, 23 are normally in a disengaged configuration and are not engaged normally when the caravan is being towed by a vehicle.

The integrated drive unit 10 may be supplied as a kit and enables the integrated drive unit 10 to be retrospectively fitted to a caravan which does not have a leisure battery or other easily accessible power source. The integrated drive unit 10 then provides an auxiliary drive for the caravan.

The kit may include a spacing component or spacer 40 to help with the correct spacing of the driven rollers from or to the respective tyre surface, as shown in Figure 11. The spacing component is arranged to locate on the mounting bracket for the driven roller and enables the integrated drive unit 10 to be mounted to the chassis of the caravan at the correct position. This spacing then sets the correct position fir the driven roller such that when the drive engagement means is in an extended position, the driven roller is urged against the circumferential surface of the tyre with a desired amount of force.

As shown in Figure 2 to Figure 7, the integrated drive unit 10 is a single self contained unit. The entire unit is self supporting and is mounted solely from the mounting means 16 provided on the single support member 28. The integrated drive unit includes all of the electrical connections and wiring for the control unit, battery and drive motors such that the system can be simply bolted on to the chassis of a caravan to convert an unpowered caravan into a powered caravan.

The integrated drive unit 10 is a single item on which the battery and the drive means are rigidly supported. The integrated drive unit 10 provides a continuous linear member extending between the battery and the drive means. In particular, the battery is located between a first drive roller and a second drive roller. The two drive rollers are rigidly secured at or towards lateral ends of a rigid member and the battery is also mounted to this rigid member. Accordingly, the rigid member is simply secured to the underside of a caravan at a suitable location for the two driven rollers to engage with the two wheels of the caravan.

The integrated drive unit for a caravan combines powerful motors with an integrated power source in one unit. The single integrated arrangement means that there is no drilling required in the installation and, therefore, there is no damage to the caravan as a result of the installation. The installation requires no cutting of cables and no running cables through the caravan but does require zip ties. Furthermore, the complete system means that there is no requirement for a separate battery inside the caravan and may or may not require a separate charger.

Overall, the integrated drive unit 10 an entire powered drive system for a caravan which simply needs to be attached to the chassis of the caravan. The simple fitting of the caravan mover means that the system can be easily and cheaply complete and installed in 60 minutes. The integrated drive unit 10 may be provide in kit form and provides a "plug and play" easy to assembly system in which all parts are provided

The drive unit is quick and easy to install such that the mounting means can be solely secured to the underside of the caravan prior to the drive means being secured thereto. In addition, the control means and power means are not mounted to the mounting means and this also reduces the weight of the component(s) that initially need to be lifted and secured to the underside of the caravan.

Previously, some prior art drive units were relatively heavy and the apparatus needed to be lifted into position underneath a caravan (and inside the caravan) and held in that position whilst the drive unit was correctly secured.

In addition, some prior art drive units are relatively heavy and are left permanently attached to the caravan attached. This weight is generally detrimental to the performance and manoeuvrability of the caravan and may decrease the efficiency of the caravan. Furthermore, such permanent attachment exposes the component(s) to the elements and there is also a risk of damage to the exposed components. Finally, the permanent attachment restricts the use of these components solely and exclusively to the caravan to which the drive unit is permanently attached.

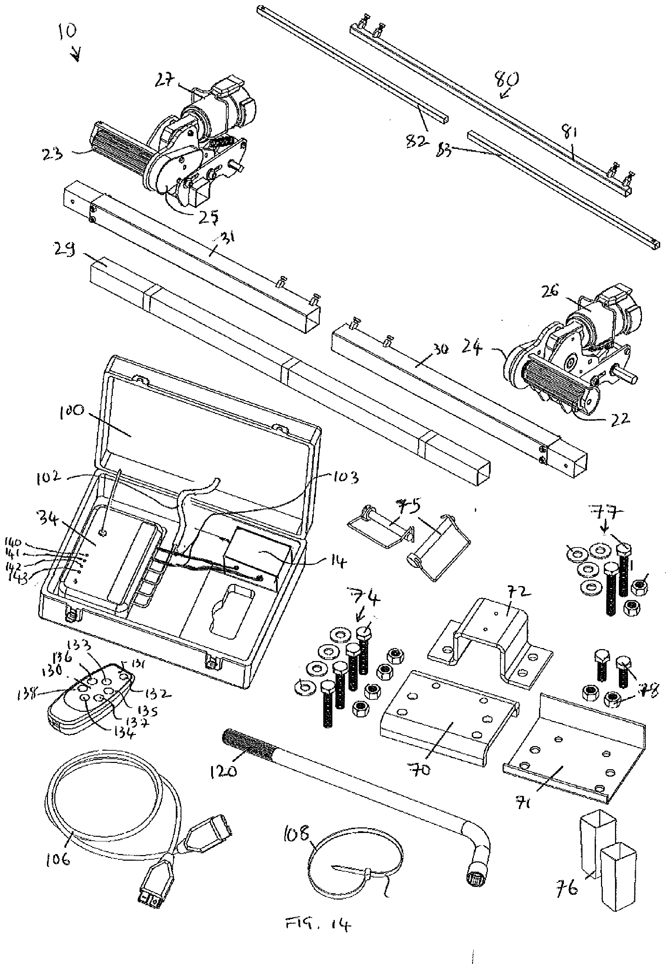

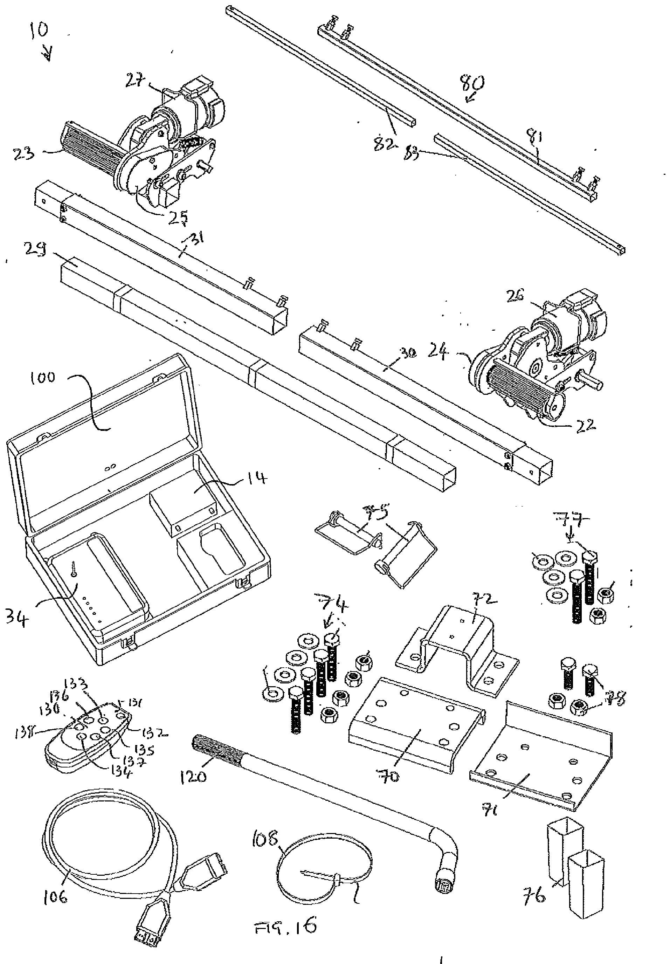

The preferred embodiment of the present invention, as shown in Figure 14, Figure 15, Figure 16 and Figure 17, will now be described using the same terminology and reference numerals as used above. All of the details will not be fully described where these have already been described.

The preferred embodiment of the drive unit 10 comprises power means which is detachably connected to the drive means by power leads said detachable connection comprising connector plugs 104, 105, 114, 111 and wherein the power means is provided in a portable case 34.

The preferred installation steps for the preferred embodiment of the present invention will now be described. The caravan should be placed on a hard, level surface. The use of a lifting ramp or an assembly pit is ideal for access and personal safety. To ensure a good fitting, the chassis should be cleaned where in the areas where the components will be mounted.

The caravan should be prepared for installation and important areas, such as drains/space tyre etc. do not cause any obstruction to the function of the mover.

Both driven rollers 22, 23 are placed in the disengaged position to ensure that the unit will fit correctly. The cross bar components 29, 30, 31 should be initially loosely assembled. The nuts on each cross bar must be no more than finger-tight at this stage.

The cross bar assembly is then placed loosely under the caravan. In principle, the unit should be fitted in front of the caravan road wheels 18, 19, but if fitting in this position is not possible, it is permissible to fit it to the rear of the wheels 18, 19 by rotating the whole assembly by 180° degrees.

The two clamping assemblies (clamping plates 70, 71, 72) are loosely fitted to the chassis and attached using the bolts, nuts and washers 74 provided. The nuts must be no more than finger-tight.

The centre cross bar 29 is positioned in the middle of the caravan/mover. The centre of the cross bar 29 is marked.

With the main assembly loosely fitted onto the chassis, each motor unit can be slidably mounted onto each end of the cross bar assembly and secured using either the wire-lock pins 75 or, for a more permanent mounting (i.e. there is no requirement to detach the motors every time the mover system is used) then secure the motors using the bolts, washers and Nylock Nuts 77.

With the main assembly loosely fitted onto the chassis, slide the whole assembly along the chassis until the rollers are 20mm away from the surface of the centre each tyre. Two 20mm spacers 76 are provided.

It is vitally important that each roller 22, 23 is at exactly the same distance away from the tyre. The whole assembly must be parallel to the caravan/trailer axle.

The locking bolts are loosened to enable the motor units to be slidably moved in or out of the centre cross bar accordingly to ensure each roller 22, 23 will have the maximum possible contact with the tread of the tyre. The position of each motor unit is checked to ensure that it does not obstruct the shock absorbers (if fitted) and that the gear housing has a minimum distance of 10mm to the inner surface of the tyre when the mover is engaged.

The four Nylock nuts 74 are fully tightened on both clamping assemblies to a torque setting of 40 ft lbs/55Nm, then the four bolts on the cross bars 30, 31 are fully tightened to a torque setting of 9ft lbs/12Nm. The distance of 20 mm from the rollers to the tyres is rechecked and if necessary, the bolts are loosened and readjusted to provide the correct position of the assembly.

If fitted the bolts 77 that secure each motor unit should be tightened to a torque setting of 27ft lbs/37Nm.

Once satisfied with the position of the assembly, the chassis stop nuts and bolts 78 are fitted and tightened, one pair in each of the upper chassis clamp plates 70. Tighten to a torque setting of 40 ft lbs/55Nm. The stop bolts 78 grip the lip of the chassis and help prevent the mover from sliding along the chassis. The main mechanical components are now installed.

The drive unit 10 may include a cross actuation bar 80. The cross actuation bar 80 is assembled from three parts 81, 82, 83 which are connected to the motor units 24, 25 with Nylock nuts and bolts onto cross actuation bar-connectors. These four bolts are tightened on the cross actuation assembly to a torque setting of 9ft lbs/12 Nm.

All the electrical components are pre-wired with weatherproof with two-pole plug connectors.

Each motor unit has a plug connector secured to the top which are pre-wired to the positive (+) and negative (-) terminals of the motors.

The supplied carry case 100 contains the electronic control unit 34 which is also pre-wired. The cable 102 that attaches to both motors is spooled around cable storage hooks on the lid of the case 100. The motor cable 102 is a four-core cable that splits into two connectors 104, 105, one for each motor.

The battery cable 103 is also pre-wired to the control unit 34 and is stored in the same manner as the motor cable 102.

The motor connections are pre-configured for installation of the motors in front of the wheels/axle.

A motor cable extension 106 is supplied so that both motors can be plugged in on one side of the caravan/trailer. When installing the cross bar 28 it needs to be determined which side is most convenient for the motors to be plugged in. In normal circumstances, during operation, the carry case 100 containing the electronics and cables would be located in the doorway of a caravan or in an externally accessible locker. The motor cable extension 106 should be connected to the plug 116 on top of the motor on the opposite side to where you want to be able to access both motor plugs and should be secured with a cable-tie 108 to the cross bar assembly. That means that both motors can be connected to the control unit 34 from just one side for convenience.

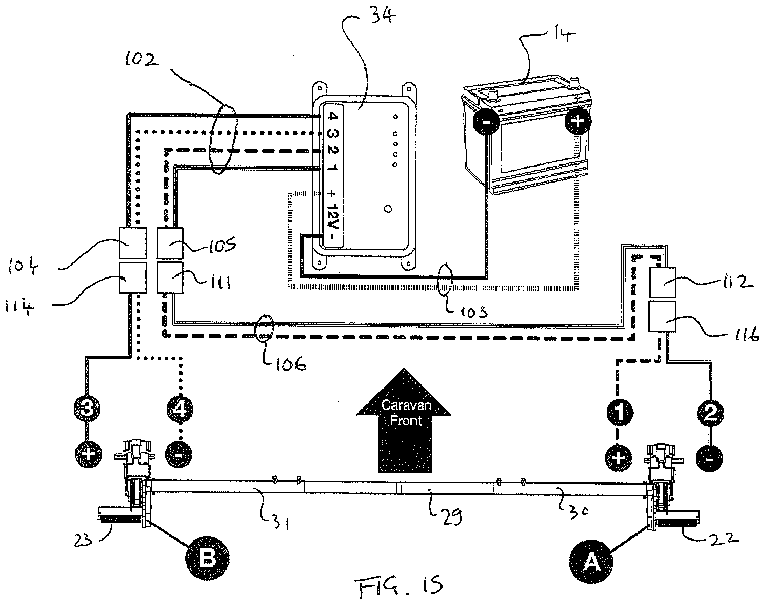

The wiring schematic (see Figure 15) shows the configuration for front of axle fitting with the extension cable 106 connected to locate both motor plug connectors 114, 111 on the left hand side of a caravan. If the motor plug connectors 114, 111 are required to be located on the right hand side then the connections of the spade connectors must be swapped on the control unit 34.

Before operation of the mover system, the carry case 100 that contains the control unit 34 and cables should be located in a convenient location such as in the caravan doorway or in an externally accessible locker.

Firstly, the motor cable 102 is unwound and connected to both motor plug connectors 114, 111 for both motors (the plug connectors are colour coded).

The minimum amount of cable 102 is unwound and only the length that is required between the motors and the carry case 100. This is advantageous since it prevents the cable 102 from getting caught on any moving parts and prevents the cable 102 from dragging on the ground. The cable 102 between the motors and the control unit 34 should be taut but not overtight in order to avoid straining any plug connectors 104, 105, 111, 112, 114, 116.

The battery cable 103 is unwound from the carry case 100 and connected to the 12V battery power source 14.

The motor units are designed to be easily attached/detached if the user does not wish for them to remain in position during transit or if they only envisage using the mover system at home rather than during a holiday.

If a temporary fitment is used then each motor must be fitted onto the cross bar before operation.

In order to do this, the appropriate side motor is located and slidably moved onto each end cross bar and then secured into position by inserting the wire-lock pins. The pin must be locked in place with the spring wire fully locked.

In order to engage the rollers 22, 23, the end socket of the engagement tool 120 is fitted on to the spindle on the right or left drive unit. The engagement tool 120 is positioned parallel to the ground, then the tool 120 is rotated through approximately 180° degrees.

The engagement mechanism utilises a simple over-centre cam that pushes the rollers onto the tyres and then locks into place automatically. If the mover has been installed correctly, (in one embodiment this may be at exactly 20mm away from the tyres when disengaged) the amount of force provided onto the tyre by the roller will be sufficient for most circumstances of use.

To disengage the rollers, the tool 120 is simply refitted onto one of the spindles and rotated away from the tyre. A small amount of resistance may still be felt initially as the cam is disengaged from the locked position; the spring will then do the rest of the work and pull the roller away from the tyre and into the fully disengaged position.

The mover 10 has two motor units. In general they are mounted in front of the axle of the caravan/trailer. Both units are identical but cannot be switched.

The remote control handset 130 is powered by three 'AAA' 1.5V batteries, and is activated by double-pressing the power button 132. Once activated a green LED 131 will illuminate and the directional controls can be used. If the handset 130 has not been used for a period of 60 seconds then it will automatically switch itself off. The actions of the buttons are as follows:
Button 132 = On (press button twice within one second, green LED illuminates)
Button 133 = Caravan forwards (both wheels rotate in forwards direction)
Button 134 = Caravan reverse (both wheels rotate in reverse direction)
Button 135 = Caravan left forwards (right wheel rotates in forwards direction)
Button 136 = Caravan right forwards (left wheel rotates in forwards direction)
Button 137 = Caravan left reverse (right wheel rotates in reverse direction)
Button 138 = Caravan right reverse (left wheel rotates in reverse direction)

In addition, the 'left forward' button 135 and 'right reverse' button 138 or 'right forward' button 133 and 'left reverse' button 137 may be pressed at the same time to turn the caravan around on its own axis (without moving forward or backward). However, this function is disabled when the electronics are in twin-axle mode.

When pressing a directional button on the handset, the mover starts slowly, normal speed will be reached within 2.5 seconds.

The electronic control unit 34 which is mounted inside the caravan, is responsible for controlling the caravan mover.

The control unit has three LED's 140, 141, 142 and one recessed button 143:
Green LED -This will illuminate when receiving the signal. The LED will flash if the remote control is out of range (the maximum range is 100 metres - without obstruction).
Blue LED - This will illuminate if the temperature of the control unit is too high, or if the battery voltage is too low or too high.

The Red LED will specify the error as follows:
Red LED - Voltage too low <10V: LED will flash twice slowly.
Voltage too high >15V: LED will flash fast 5 times.
Electric current is too high (≥120A): LED will constantly flash. Temperature is too high >80C: LED is on permanently.

Reset Button 143 - This only needs to be used when replacing a remote control handset.

When the control unit 34 is connected to the power, it will perform a self-test automatically. The three LEDs will illuminate for 0.2 seconds, and turn off, which means there is no error and the unit is functioning correctly.

As a safety feature the control unit 34 will switch off automatically if no button is pressed within 60 seconds. The control unit will also turn off automatically if the mover is working constantly in one direction for longer than 3 minutes.

It is, of course, impossible for a twin-axle caravan to be manoeuvred in the same way as a single-axle as the turning circle is greatly increased compared to a single-axle caravan. Also, the amount of different manoeuvres required to locate/park your caravan is increased.

However, the advanced electronics take care of the manoeuvring whilst also taking care of your caravan.

For example, when the caravan is turning, the motors provide lower rotational speed on one side to help enable direction change. This enables the caravan to manoeuvre with minimal tyre 'scrub' or being dragged along the ground, which can cause undue stresses on its tyres, wheel hubs and chassis.

It is also a possibility that when operating a two motor twin-axle system, on very uneven ground, one of the wheels driven by the mover will not make adequate contact to continue progress. If this occurs, the caravan should be moved in a different direction until adequate traction is regained.

Firstly, both rollers should be engaged. This only needs to be done on one side of the caravan since the other side will automatically follow via the cross actuation bar. Before operating the mover, the handbrake must be released.

The mover is activated by double-clicking the power button on the remote control. The LED on the remote control will illuminate. The movements can be selected according the symbols shown on the remote control. As soon as the buttons are released the caravan will stop.

The mover moves at one speed after the initial 'soft-start'. The speed can increase a little when going downhill and decrease a little when going uphill. The mover may be more efficient when reversing the caravan up an incline.

After manoeuvring, the mover is deactivated by double-clicking the power button on the remote control again. The LED on the remote control will turn off. First the handbrake is applied first and then the drive rollers are disengaged from the tyres.

The remote control can be stored in a safe place (out of reach of children or other unauthorised people).

It is possible to position the caravan's hitch exactly over a stationery car's tow ball using the mover. The button controls on the remote control are used to bring the caravan to the car. It is better to reach the tow ball with several short "trips" rather than trying to do it in one "trip". When the hitch is right above the tow ball of the vehicle, the hitch is lowered to the ball and engaged in the normal way using the jockey wheel. The caravan is hitched in the normal way ready for towing. The rollers are released from the caravan's tyres and are fully disengaged!

In the preferred embodiment, the battery 14 and mother board/control unit 34 are retained in a bag or container or carry case which means when unplugged it is completely mobile to the caravan and can be stored in the tow car when not in use, in order to save payload weight. When in use (and plugged in) the battery and motherboard can sit in the door way of the caravan, or A- frame/ locker box without being a permanent fixture giving complete flexibility.

The mover will still retain the ability to be pre-wired without the need to cut cables drill the floor of the caravan or find a permanent position inside the caravan to retain mother board or battery.

One main advantage of the present invention is to avoid the requirement of having to drill holes through the body shell of the caravan in order to provide a route for any power leads. The power leads of the present invention are always external and/or only pass through openings or doorways already provided by the caravan, e.g. the main doorway of the caravan or a charging groove provided by the caravan or folding camper.

The mounting bar 28 or fitting bar may be sold separately for people with more than one trailer/caravan. For example, a user may have several trailers all with mounting bars 28 fitted. The user may have a single carry case 100 and two detachable motors which can then be used to the trailers when required.

This arrangement enables the fitting of one set of motors that drive the caravan/trailer wheels via the use of a powered roller to multiple different trailers/caravan without the use of tools.

The fitting time for the preferred embodiment of the present invention is approximately 60 minute fitting time (80% less than the normal 5 hours).

The preferred embodiment of the present invention includes detachable motors, electronics and battery leaving around 10kg retained weight on the caravan. This provides a 40kg weight saving (when you include battery) compared to equivalent prior art systems.

The fitting of the preferred embodiment of the present invention does not require cables to be cut. In addition, there is no drilling through the floor of the caravan. The present invention provides a simple bolt crossbar to the caravan chassis, clip on motors and power pack and the user is ready to go!

The detachable motors of the present invention provide weight saving when required of up to 25kg on this part alone.

The motors can be stored inside for protection over winter, security and long term serviceability

The detachable battery/power pack saves at least 15kg on retained weight on the caravan and it comes in an easy to handle hard cased carrier which makes storage simple.

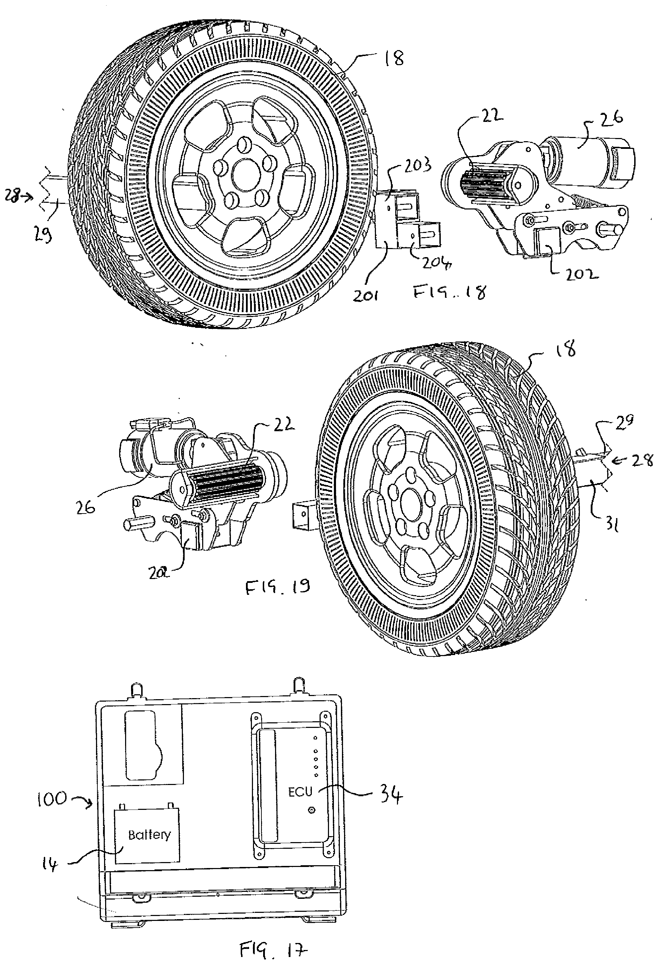

Figure 18 and Figure 19 show alternative mounting means for the drive unit relative to the cross bar 28. The drive unit comprises a sleeve portion 202 into which a longitudinal end of the cross bar 28 may be inserted. The sleeve portion 202 may have a quadrilateral cross section (preferably square) which is dimensioned to accept an end of the cross bar 28. The sleeve portion 202 may include an end cap to prevent the end of the cross bar passing all the way through the sleeve portion 202 and for aesthetic reason. The drive unit is arranged to be slid onto the end of the cross bar and is then secured in opposition and retained thereto. The sleeve portion may provide apertures through which a securing pin can extend. Similarly, end of the cross bar 28 provide a passage or holes through which the securing pin can extend when the sleeve portion is in the correct position and the respective holes and apertures register and are aligned.

The present invention may include an adaptor 201 in order to adjust the height of the drive unit relative to the wheel 18, as shown in Figure 18. The adaptor 201 includes a first sleeve portion 203 which is arranged to be secured to the cross bar 28 in the same way as the drive unit can be secured to the cross bar 28. In addition, the adaptor 201 includes an end portion 204 which resembles the end of the cross bar 28. Accordingly, once the adaptor 201 is secured to the cross bar 28, the adaptor 201 provides a securing end 204 on to which the drive unit can be secured. This securing end 204 is provided at a vertically offset position relative to the cross bar 28. In particular, the securing end 204 provides a lower securing position such that the drive roller 22 will engage with the tyre at a lower position.

## Claims

1. A drive unit (10) for a trailer comprising drive means (12), power means and mounting means, the mounting means being arranged, in use, to be secured to the trailer, the drive means being arranged to rotate a wheel (18) of a trailer around an axle of the trailer, the drive means (12) comprising actuating means to actuate engagement means between a disengaged configuration and an engaged configuration in which the engagement means transmits movement of the drive means (12) to a wheel (18) of the trailer, **characterised in that**:
the power means is detachably connected to the drive means (12) by power leads (102, 106) said detachable connection comprising connector plugs (104, 105, 111, 114) and wherein the power means is provided in a portable case (100), the drive unit (10) further comprises control means to control the movement of the trailer by the drive unit (10) and wherein the control means comprise a control unit (34) located in the portable case (100) and an operating device which comprises a remote control unit (130).

2. A drive unit (10) for a trailer according to Claim 1 in which the portable case (100) comprises lead retaining means to retain and store the power supply leads (102) when not in use and in which the lead retaining means comprise spooling means such that the power supply leads (102) are spooled when not in use.

3. A drive unit (10) according to any preceding claim in which the portable case (100) is arranged, in use, to be supported to the trailer and, in which, the portable case (100) is arranged to be supported in a doorway of the trailer to prevent penetration of a body shell of the trailer and to provide an external route for leads (102, 106) connecting the power means to the drive means (12).

4. A drive unit (10) according to any preceding claim in which the portable case (100) is arranged, in use, to be supported to the trailer by case support means and wherein the case support means comprises a part of an A frame of the trailer.

5. A drive unit (10) for a trailer according to Claim 1 in which the drive means (12) is detachably mounted to the mounting means with a temporary fitment, the drive unit (10) comprising a first wheel detachable driving device and a second wheel detachable driving device, each wheel driving device comprise a driven roller (22, 23), a motor (24, 25) and drive engagement means (26, 27) and, in which, each wheel driving device is detachable from a support member (29, 30, 31), each wheel driving device is arranged, in use, to be mounted on a driving device mounting bracket and the drive unit (10) comprises a first driving device mounting bracket located at or towards a first end of the support member (29, 30, 31) and a second driving device mounting bracket located at or towards a second end of the support member (29, 30, 31).

6. A drive unit (10) according to any preceding claim in which the drive means (12) comprise power receiving leads which are arranged to receive the power from the power means and wherein the power receiving leads terminate at a power receiving connector (111, 114) which comprises a two pole weatherproof connector and wherein a power source (14) comprises power supply leads (102) which are arranged to supply power to the drive means (12) and wherein the power supply leads (102) terminate at a power supply connector (104, 105) which comprises a two pole weatherproof connector and, in which, the power receiving connector (111, 114) and the power supply connector (104, 105) are arranged to be plugged together and form a plug and socket arrangement.

7. A drive unit (10) according to any preceding claim in which the control means is incorporated within the power means and the power means comprises a power source (14) and the control means and, in which, the power source (14) is connected to the control unit (34) by power cables (103) and power supply leads (102) are arranged to extend from the control unit (34) and these power supply leads (102) are arranged to be detachably connected to the power receiving leads of the drive means (12).

8. A drive unit (10) according to any preceding claim in which the drive unit (10) comprise two pairs of power supply leads (102) and wherein the first pair of power supply leads (102) are arranged to be detachably connected to power receiving leads of a first driven roller (22) for driving a first wheel of the trailer and the second pair of power supply leads (102) are arranged to be detachably connected to power receiving leads of a second driven roller (23) for driving a second wheel of the trailer.

9. A drive unit (10) according to any preceding claim in which the drive unit (10) comprise four pairs of power supply leads (102) and wherein each pair of power supply leads (102) are arranged to be detachably connected to power receiving leads of a respective driven roller for driving a respective wheel of the trailer.

10. A drive unit (10) according to any preceding claim in which the drive unit (10) comprises include an adaptor (201) in order to adjust the height of the drive means 12) relative to the wheel (18).

11. A drive unit (10) according to Claim 10 in which the adaptor (201) includes a first sleeve portion (203) which is arranged to be secured to a cross bar (28) of the mounting means and the adaptor (201) includes an end portion (204) which resembles the end of the cross bar (28), and wherein, once the adaptor (201) is secured to the cross bar (28), the adaptor (201) provides a securing end (204) on to which the drive means (12) is securable and wherein the securing end (204) is provided at a vertically offset position relative to the cross bar (28) and the securing end (204) provides a lower securing position such that the drive means (12) engages the wheel (18) at a lower position.

12. A trailer including a drive unit (10), the drive unit (10) being in accordance with any of the preceding claims.

13. A drive unit (10) according to Claim 12 in which the trailer comprises a body shell defining an internal space and wherein power receiving leads are arranged to be mounted externally of the body shell of the trailer and an entire length of the power receiving leads are arranged to be mounted or located externally of the body shell of the trailer and, in which, power supply leads (102) are arranged to be mounted externally of the body shell of the trailer and an entire length of the power supply leads (102) are arranged to be mounted or located externally of the body shell of the trailer.

14. A drive unit (10) according to Claim 12 in which an entire length of the power leads (102) are arranged to be mounted externally of the body shell of the trailer and in which the entire length of the power leads (102) comprises the length of the power leads (102) which extends between the portable case (100) and the drive means (12) and, in which, a route for an entire length of the power leads (102) is arranged to exclude the requirement for a dedicated passageway through a body shell of the trailer.

15. A method of installing a drive unit (10) to a trailer wherein the drive unit (10) comprises:
drive means (12), power means (14) and mounting means, the drive means (12) being arranged to rotate a wheel (18) of a trailer around an axle of the trailer, the drive means (12) comprising actuating means to actuate engagement means between a disengaged configuration and an engaged configuration in which the engagement means transmits movement of the drive means (12) to a wheel (18) of the trailer; **characterised by**
the method comprises detachably connecting the power means to the drive means (12) by power leads (102, 106) using a detachable connection comprising connector plugs (104, 105, 111, 114) and wherein the power means is provided in a portable case (100); and
providing control means to control the movement of the trailer by the drive unit (10) and wherein the control means comprises a control unit (34) located in the portable case (100) and an operating device which comprises a remote control unit (130).

## Patentansprüche

1. Antriebseinheit (10) für einen Anhänger, umfassend ein Antriebsmittel (12), ein Energieversorgungsmittel und ein Befestigungsmittel, wobei das Befestigungsmittel so angeordnet ist, dass es im Gebrauchszustand am Anhänger befestigt werden kann, wobei das Antriebsmittel so angeordnet ist, dass es ein Rad (18) eines Anhängers um die Achse des Anhängers drehen kann, wobei das Antriebsmittel (12) ein Betätigungsmittel umfasst, um ein Eingriffsmittel zwischen einer Nichteingriffskonfiguration und einer Eingriffskonfiguration zu bewegen, in welcher das Eingriffsmittel die Bewegung des Antriebsmittels (12) auf das Rad (18) des Anhängers überträgt, **dadurch gekennzeichnet, dass**:
das Energieversorgungsmittel lösbar mit dem Antriebsmittel (12) durch Netzanschlusskabel (102, 106) verbunden ist, wobei die lösbare Verbindung Verbindungsstecker (104, 105, 111, 114) umfasst und wobei das Energieversorgungsmittel in einem tragbaren Gehäuse (100) vorgesehen ist,
die Antriebseinheit (10) weiter ein Steuermittel umfasst, um die Bewegung des Anhängers durch die Antriebseinheit (10) zu steuern und wobei das Steuermittel eine Steuereinheit (34), welche in dem tragbaren Gehäuse (100) angeordnet ist, sowie eine Bedieneinrichtung umfasst, welche eine Fernbedienungseinheit (130) umfasst.

2. Antriebseinheit (10) für einen Anhänger nach Anspruch 1,
bei welcher das tragbare Gehäuse (100) ein Kabelhaltemittel umfasst, um die Netzversorgungskabel (102) zu halten und zu bevorraten, wenn sie nicht gebraucht werden, und wobei das Kabelhaltemittel ein Aufwickelmittel dergestalt aufweist, dass es die Netzanschlusskabel (102) aufwickeln kann, wenn sie nicht gebraucht werden.

3. Antriebseinheit (10) nach einem der vorigen Ansprüche,
bei welcher das tragbare Gehäuse (100) im Gebrauchszustand so angeordnet ist, dass es durch den Anhänger gestützt werden kann, und wobei das tragbare Gehäuse (100) so angeordnet ist, dass es in einem Durchgang des Anhängers gehalten werden kann, um den Durchbruch einer Außenhülle des Anhängers zu verhindern und einen externen Verbindungsweg für Kabel (102, 106) zu schaffen, die das Energieversorgungsmittel mit dem Antriebsmittel (12) verbinden.

4. Antriebseinheit (10) nach einem der vorigen Ansprüche,
bei welcher das tragbare Gehäuse (100) so angeordnet ist, dass es im Gebrauchszustand durch den Anhänger durch ein Gehäusehaltemittel gehalten werden kann, und wobei das Gehäusehaltemittel einen Teil eines A-Rahmens des Anhängers umfasst.

5. Antriebseinheit (10) für einen Anhänger nach Anspruch 1,
bei welcher das Antriebsmittel (12) lösbar am Befestigungsmittel mithilfe eines provisorischen Anbaus befestigt ist, wobei die Antriebseinheit (10) eine erste lösbare Radantriebseinrichtung und eine zweite lösbare Radantriebseinrichtung umfasst, wobei jede Radantriebseinrichtung eine angetriebene Rolle (22, 23), einen Motor (24, 25) und ein Antriebseingriffsmittel (26, 27) umfasst und wobei jede Radantriebseinrichtung von einem Halteelement (29, 30, 31) lösbar ist, jede Radantriebseinrichtung im Gebrauchszustand so angeordnet ist, dass sie an einer Montagehalterung für die Antriebseinrichtung befestigt werden kann und wobei die Antriebseinheit (10) eine erste Montagehalterung für die Antriebseinrichtung umfasst, welche sich an oder in Richtung eines ersten Endes des Halteelements (29, 30, 31) befindet, sowie eine zweite Montagehalterung für die Antriebseinrichtung umfasst, welche sich an oder in Richtung eines zweiten Endes des Halteelements (29, 30, 31) befindet.

6. Antriebseinheit (10) nach einem der vorigen Ansprüche,
bei welcher das Antriebsmittel (12) Netzversorgungsleitungen umfasst, welche so eingerichtet sind, dass sie eine Netzspannung von dem Energieversorgungsmittel empfangen, und wobei die Netzversorgungsleitungen an einem Netzempfangsverbinder (111, 114) enden, welcher einen zweipoligen wasserfesten Verbinder umfasst, und wobei eine Energieversorgungsquelle (14) Netzanschlusskabel (102) umfasst, welche so angeordnet sind, dass sie das Antriebsmittel (12) mit Netzspannung versorgen, und wobei die Netzanschlusskabel (102) an einem Netzversorgungsverbinder (104, 105) enden, welcher einen zweipoligen wasserfesten Verbinder umfasst, und wobei der Netzempfangsverbinder (111, 114) und der Netzversorgungsverbinder (104, 105) so eingerichtet sind, dass sie zusammengesteckt werden können und so eine Stecker-/Steckdosenanordnung ausbilden.

7. Antriebseinheit (10) nach einem der vorigen Ansprüche,
bei welcher das Steuermittel in das Energieversorgungsmittel integriert ist und das Energieversorgungsmittel eine Energieversorgungsquelle (14) und das Steuermittel umfasst, und wobei die Energieversorgungsquelle (14) mit der Steuereinheit (34) über Netzkabel (103) verbunden ist und Netzanschlusskabel (102) so eingerichtet sind, dass sie sich von der Steuereinheit (34) aus erstrecken, und wobei diese Netzanschlusskabel (102) so eingerichtet sind, dass sie lösbar mit den Netzempfangsleitungen des Antriebsmittels (12) verbunden werden können.

8. Antriebseinheit (10) nach einem der vorigen Ansprüche,
bei welcher die Antriebseinheit (10) zwei Paare von Netzanschlusskabeln (102) umfasst, und wobei das erste Paar Netzanschlusskabel (102) so angeordnet ist, dass sie sich lösbar mit den Netzempfangsleitungen einer ersten angetriebenen Rolle (22) zum Antreiben eines ersten Rades des Anhängers verbinden lassen, und wobei das zweite Paar Netzanschlusskabel (102) so angeordnet ist, dass sie sich lösbar mit den Netzempfangsleitungen einer zweiten angetriebenen Rolle (23) zum Antreiben eines zweiten Rades des Anhängers verbinden lassen.

9. Antriebseinheit (10) nach einem der vorigen Ansprüche,
bei welcher die Antriebseinheit (10) vier Paare von Netzanschlusskabeln (102) umfasst und wobei jedes Paar von Netzanschlusskabeln (102) so eingerichtet ist, dass sie sich lösbar mit Netzempfangsleitungen einer entsprechenden angetriebenen Rolle zum Antreiben eines entsprechenden Rades des Anhängers verbinden lassen.

10. Antriebseinheit (10) nach einem der vorigen Ansprüche,
bei welcher die Antriebseinheit (10) einen Adapter (201) umfasst, um die Höhe des Antriebsmittels (12) relativ zum Rad (18) einzustellen.

11. Antriebseinheit (10) nach Anspruch 10,
bei welcher der Adapter (201) einen ersten Buchsenabschnitt (203) aufweist, welcher so eingerichtet ist, dass er an einer Querstange (28) des Befestigungsmittels befestigt werden kann, und wobei der Adapter (201) einen Endabschnitt (204) umfasst, der das Ende der Querstange (28) markiert, und wobei der Adapter (201), sobald er an der Querstange (28) befestigt ist, ein Befestigungsende (204) bereitstellt, auf welchem sich das Antriebsmittel (12) befestigen lässt, und wobei das Befestigungsende (204) an einer in Vertikalrichtung versetzten Position relativ zur Querstange (28) vorgesehen ist, und wobei das Befestigungsende (204) eine untere Befestigungsposition derart bereitstellt, dass das Antriebsmittel (12) in einer unteren Position mit dem Rad (18) zusammenwirkt.

12. Anhänger, der eine Antriebseinheit (10) aufweist, wobei die Antriebseinheit (10) nach einem der vorigen Ansprüche ausgebildet ist.

13. Antriebseinheit (10) nach Anspruch 12,
bei welcher der Anhänger eine Außenhülle umfasst, welche einen Innenraum definiert, und wobei Netzempfangsleitungen so angeordnet sind, dass sie außerhalb der Außenhülle des Anhängers montiert werden können, und wobei die Gesamtlänge der Netzempfangsleitungen so gehalten ist, dass sie außerhalb der Außenhülle des An-hängers montiert oder angeordnet werden können, und wobei Netzanschlusskabel (102) so angeordnet sind, dass sie außerhalb der Außenhülle des Anhängers montiert werden können, und wobei die Gesamtlänge der Netzanschlusskabel (102) so gehalten ist, dass diese außerhalb der Außenhülle des Anhängers befestigt oder angeordnet werden können.

14. Antriebseinheit (10) nach Anspruch 12,
bei welcher die Gesamtlänge der Netzanschlusskabel (102) so gehalten ist, dass diese außerhalb der Außenhülle des Anhängers montiert werden können, und bei welcher die Gesamtlänge der Netzanschlusskabel (102) die Länge der Netzanschlusskabel (102) umfasst, welche sich zwischen dem tragbaren Gehäuse (100) und dem Antriebsmittel (12) erstreckt, und wobei eine Verbindung für die Gesamtlänge der Netzanschlusskabel (102) so gehalten ist, dass das Erfordernis für einen festgelegten Durchgang durch die Außenhülle des Anhängers ausgeschlossen wird.

15. Verfahren zum Einrichten einer Antriebseinheit (10) an einem Anhänger, wobei die Antriebseinheit (10) folgendes umfasst:
ein Antriebsmittel (12), ein Energieversorgungsmittel (14) und ein Befestigungsmittel, wobei das Antriebsmittel (12) so angeordnet ist, dass es ein Rad (18) des Anhängers um eine Achse des Anhängers drehen kann, wobei das Antriebsmittel (12) ein Betätigungsmittel umfasst, um ein Eingriffsmittel zwischen einer Nichteingriffskonfiguration und einer Eingriffskonfiguration zu bewegen, in welcher das Eingriffsmittel die Bewegung des Antriebsmittels (12) auf ein Rad (18) des Anhängers überträgt;
**gekennzeichnet dadurch**
**dass** das Verfahren das lösbare Verbinden des Energieversorgungsmittels mit dem Antriebsmittel (12) durch Netzanschlusskabel (102, 106) unter Verwendung einer lösbaren Verbindung mit Verbindungsstecker (104, 105, 111, 114) umfasst, und wobei das Energieversorgungsmittel in einem tragbaren Gehäuse (100) bereitgestellt ist; und
Bereitstellen eines Steuermittels, um die Bewegung des Anhängers durch die Antriebseinheit (10) zu steuern, und wobei das Steuermittel eine Steuereinheit (34), welche sich in dem tragbaren Gehäuse (100) befindet, sowie eine Betätigungseinrichtung umfasst, welche eine Fernbedienungseinheit (130) umfasst.

## Revendications

1. Unité d'entraînement (10) pour une remorque comprenant un moyen d'entraînement (12), un moyen d'alimentation et un moyen de montage, le moyen de montage étant agencé pour, en utilisation, être fixé à la remorque, le moyen d'entraînement étant agencé pour faire tourner une roue (18) d'une remorque autour d'un essieu de la remorque, le moyen d'entraînement (12) comprenant un moyen d'actionnement pour actionner un moyen d'engagement entre une configuration désengagée et une configuration engagée dans laquelle le moyen d'engagement transmet un mouvement du moyen d'entraînement (12) à une roue (18) de la remorque, **caractérisée par le fait que** :
le moyen d'alimentation est relié de manière détachable au moyen d'entraînement (12) par des fils d'alimentation (102, 106), ladite liaison détachable comprenant des fiches de connecteur (104, 105, 111, 114), et le moyen d'alimentation étant disposé dans un boîtier portable (100), l'unité d'entraînement (10) comprend en outre un moyen de commande pour commander le mouvement de la remorque par l'unité d'entraînement (10) et le moyen de commande comprenant une unité de commande (34) située dans le boîtier portable (100) et un dispositif de fonctionnement qui comprend une unité de commande à distance (130).

2. Unité d'entraînement (10) pour une remorque selon la revendication 1, dans laquelle le boîtier portable (100) comprend un moyen de retenue de fils pour retenir et stocker les fils d'alimentation électrique (102) lorsqu'ils ne sont pas en utilisation, et le moyen de retenue de fils comprend un moyen d'enroulement de telle sorte que les fils d'alimentation électrique (102) sont enroulés lorsqu'ils ne sont pas en utilisation.

3. Unité d'entraînement (10) selon l'une quelconque des revendications précédentes, dans laquelle le boîtier portable (100) est agencé pour, en utilisation, être supporté sur la remorque, et le boîtier portable (100) est agencé pour être supporté dans une entrée de porte de la remorque pour empêcher la pénétration d'une coque de corps de la remorque et fournir un trajet externe pour les fils (102, 106) reliant le moyen d'alimentation au moyen d'entraînement (12).

4. Unité d'entraînement (10) selon l'une quelconque des revendications précédentes, dans laquelle le boîtier portable (100) est agencé pour, en utilisation, être supporté sur la remorque par un moyen de support de boîtier et le moyen de support de boîtier comprend une partie d'un chevalet de la remorque.

5. Unité d'entraînement (10) selon la revendication 1, dans laquelle le moyen d'entraînement (12) est monté de manière détachable sur le moyen de montage avec un accessoire temporaire, l'unité d'entraînement (10) comprenant un premier dispositif d'entraînement détachable de roue et un second dispositif d'entraînement détachable de roue, chaque dispositif d'entraînement de roue comprend un rouleau entraîné (22, 23), un moteur (24, 25) et un moyen d'engagement d'entraînement (26, 27) et chaque dispositif d'entraînement de roue est détachable d'un élément de support (29, 30, 31), chaque dispositif d'entraînement de roue est agencé pour, en utilisation, être monté sur une console de montage de dispositif d'entraînement et l'unité d'entraînement (10) comprend une console de montage de premier dispositif d'entraînement située à ou vers une première extrémité de l'élément de support (29, 30, 31) et une console de montage de second dispositif d'entraînement située à ou vers une seconde extrémité de l'élément de support (29, 30, 31).

6. Unité d'entraînement (10) selon l'une quelconque des revendications précédentes, dans laquelle le moyen d'entraînement (12) comprend des fils de réception d'alimentation qui sont agencés pour recevoir l'alimentation provenant du moyen d'alimentation, et les fils de réception d'alimentation se terminent à un connecteur de réception d'alimentation (111, 114) qui comprend un connecteur bipolaire résistant aux intempéries, et une source d'alimentation (14) comprend des fils d'alimentation électrique (102) qui sont agencés pour fournir une alimentation au moyen d'entraînement (12), et les fils d'alimentation électrique (102) se terminent à un connecteur d'alimentation électrique (104, 105) qui comprend un connecteur bipolaire résistant aux intempéries, et le connecteur de réception d'alimentation (111, 114) et le connecteur d'alimentation électrique (104, 105) sont agencés pour être branchés ensemble et former un agencement à contacts mâle et femelle.

7. Unité d'entraînement (10) selon l'une quelconque des revendications précédentes, dans laquelle le moyen de commande est incorporé dans le moyen d'alimentation et le moyen d'alimentation comprend une source d'alimentation (14) et le moyen de commande, et la source d'alimentation (14) est reliée à l'unité de commande (34) par des câbles d'alimentation (103), et des fils d'alimentation électrique (102) sont agencés pour s'étendre à partir de l'unité de commande (34), et ces fils d'alimentation électrique (102) sont agencés pour être reliés de manière détachable aux fils de réception d'alimentation du moyen d'entraînement (12).

8. Unité d'entraînement (10) selon l'une quelconque des revendications précédentes, dans laquelle l'unité d'entraînement (10) comprend deux paires de fils d'alimentation électrique (102), et la première paire de fils d'alimentation électrique (102) est agencée pour être reliée de manière détachable à des fils de réception d'alimentation d'un premier rouleau entraîné (22) pour entraîner une première roue de la remorque et la seconde paire de fils d'alimentation électrique (102) est agencée pour être reliée de manière détachable à des fils de réception d'alimentation d'un second rouleau entraîné (23) pour entraîner une seconde roue de la remorque.

9. Unité d'entraînement (10) selon l'une quelconque des revendications précédentes, dans laquelle l'unité d'entraînement (10) comprend quatre paires de fils d'alimentation électrique (102), et chaque paire de fils d'alimentation électrique (102) est agencée pour être reliée de manière détachable à des fils de réception d'alimentation d'un rouleau entraîné respectif pour entraîner une roue respective de la remorque.

10. Unité d'entraînement (10) selon l'une quelconque des revendications précédentes, dans laquelle l'unité d'entraînement (10) comprend un adaptateur (201) afin d'ajuster la hauteur du moyen d'entraînement (12) par rapport à la roue (18).

11. Unité d'entraînement (10) selon la revendication 10, dans laquelle l'adaptateur (201) comprend une première partie de manchon (203) qui est agencée pour être fixée à une barre transversale (28) du moyen de montage et l'adaptateur (201) comprend une partie d'extrémité (204) qui est similaire à l'extrémité de la barre transversale (28) et, une fois que l'adaptateur (201) est fixé à la barre transversale (28), l'adaptateur (201) fournit une extrémité de fixation (204) sur laquelle le moyen d'entraînement (12) est apte à être fixé, et l'extrémité de fixation (204) est placée dans une position décalée verticalement par rapport à la barre transversale (28), et l'extrémité de fixation (204) fournit une position de fixation inférieure de telle sorte que le moyen d'entraînement (12) engage la roue (18) dans une position inférieure.

12. Remorque comprenant une unité d'entraînement (10), l'unité d'entraînement (10) étant selon l'une quelconque des revendications précédentes.

13. Unité d'entraînement (10) selon la revendication 12, dans laquelle la remorque comprend une coque de corps définissant un espace interne et des fils de réception d'alimentation sont agencés pour être montés extérieurement à la coque de corps de la remorque et une longueur totale des fils de réception d'alimentation est agencée pour être montée ou située extérieurement à la coque de corps de la remorque, et des fils d'alimentation électrique (102) sont agencés pour être montés extérieurement à la coque de corps de la remorque et une longueur totale des fils d'alimentation électrique (102) est agencée pour être montée ou située extérieurement à la coque de corps de la remorque.

14. Unité d'entraînement (10) selon la revendication 12, dans laquelle une longueur totale des fils d'alimentation (102) est agencée pour être montée extérieurement à la coque de corps de la remorque, et la longueur totale des fils d'alimentation (102) comprend la longueur des fils d'alimentation (102) qui s'étend entre le boîtier portable (100) et le moyen d'entraînement (12), et un trajet pour une longueur totale des fils d'alimentation (102) est agencé pour exclure l'exigence d'un passage dédié à travers une coque de corps de la remorque.

15. Procédé d'installation d'une unité d'entraînement (10) sur une remorque, l'unité d'entraînement (10) comprenant :
un moyen d'entraînement (12), un moyen d'alimentation (14) et un moyen de montage, le moyen d'entraînement (12) étant agencé pour faire tourner une roue (18) d'une remorque autour d'un essieu de la remorque, le moyen d'entraînement (12) comprenant un moyen d'actionnement pour actionner un moyen d'engagement entre une configuration désengagée et une configuration engagée dans laquelle le moyen d'engagement transmet un mouvement du moyen d'entraînement (12) à une roue (18) de la remorque, **caractérisé par**
le procédé comprend relier de manière détachable le moyen d'alimentation au moyen d'entraînement (12) par des fils d'alimentation (102, 106) à l'aide d'une liaison détachable comprenant des fiches de connecteur (104, 105, 111, 114), et le moyen d'alimentation étant disposé dans un boîtier portable (100) ; et
disposer un moyen de commande pour commander le mouvement de la remorque par l'unité d'entraînement (10), et le moyen de commande comprenant une unité de commande (34) située dans le boîtier portable (100) et un dispositif de fonctionnement qui comprend une unité de commande à distance (130).
